# EUROPEAN PATENT APPLICATION

(11) **EP 1 061 384 A1**
(43) Date of publication of application: **20.12.2000**
(21) Application number: 99951155.3
(22) Date of filing: 29.10.1999
(51) Int. Cl.: G02B 6/00

(54) **OPTICAL FIBER ARRAY**

(30) Priority: 02.11.1998 JP 31222598
(71) Applicant: NGK INSULATORS, LTD., Nagoya-City, Aichi Prefecture 467-8530 (JP)
(72) Inventor: ICHIGI, Takenori, Konan-city, Aichi 483-8226 (JP); KONDO, Jungo, Nishikamo-gun, Aichi 470-0200 (JP); NAKASUJI, Yoshizumi, Nagoya-city, Aichi 467-0007 (JP); KITAKAMI, Eiji, Kasugai-city, Aichi 487-0014 (JP)
(74) Representative: Paget, Hugh Charles Edward
(86) International application number: JP9906025
(87) International publication number: WO0026708

(57) **Abstract**

An optical fiber array having a structure where a V-groove substrate (5) in which a V-groove (6) is formed and a lid substrate (4) integral with the V-groove substrate (5) are provided, and a core section (2) of the end of the optical fiber (1) from which its cover is removed is placed on the V-groove (6) and pressed from above the V-groove substrate (5) against the V-groove (6) by means of the lid substrate (4) to secure the core section (2). A resin layer (9) is formed at least on the portion at which the lid substrate (4) is brought into contact with the core section (2) when the lid substrate (4) presses the core section (2). During the assembly of the optical fiber array, the optical fiber is hardly damaged when the lid substrate presses the core section against the V-groove and hardly breaks because of damage.

## Description

### Technical Field

The present invention relates to an optical fiber array formed by fixing a core wire part of a distal end of an optical fiber to a substrate.

### Background Art

In general, the optical fiber array has a structure in which a V groove substrate, on which a V groove is formed, and a lid substrate, which is integrally made with the V groove substrate, are equipped, the core wire part, that is made by removing a cover of the distal end of the optical fiber, is mounted on the V groove of the V groove substrate, and the core wire part is pressed from the top surface of the V groove substrate to the V groove by the lid substrate in order to fix it. Conventionally, the optical fiber array of such structure used was those in which the V groove substrate and the lid substrate are formed with the same material and made of a hard material such as glass, silicon, etc. This is for necessity of a hard, undeformable material for precise positioning by arranging a plurality of fibers.

However, in assembling the conventional optical fiber array of which the V groove substrate and the lid substrate are formed with a hard material such as glass and silicon as described above, the optical fiber may be damaged by an edge of the lid substrate, a starting point of a spot facing (stepped part) formed on the substrate to support a coating part of the optical fiber, and a projection made by finishing condition of the surface of the substrate, when the core wire part of the optical fiber is pressed to the V groove of the V groove substrate with the lid substrate.

In the case where the optical fiber array is assembled in the condition of such fiber has been damaged, there is the following problem: a crack developed from the damage is extended by stretch of the fiber and thermal cycle easily to break the fiber.

The present invention was created in consideration of such conventional circumstances and has an object to provide the optical fiber array in that there is almost no damage of the optical fiber caused by pressing the core wire part of the optical fiber to the V groove by the substrate and a possibility of a break, that is caused by the damage, of the fiber is very low.

### Disclosure of the Invention

According to the present invention, an optical fiber array, characterized by having a structure in which a V groove substrate, on which a V groove is formed, and a lid substrate, which is integrally made with the V groove substrate, are equipped, a core wire part, that is made by removing a cover of the distal end of the optical fiber, is mounted on said V groove on the V groove substrate, and said core wire part is pressed from the top surface of the V groove substrate to the V groove by said lid substrate in order to fix it, wherein a resin layer is formed in a part contacting to at least the core wire part of the surface of a side to which the core wire part of said lid substrate is pressed, is provided.

### Brief Description of the Drawings

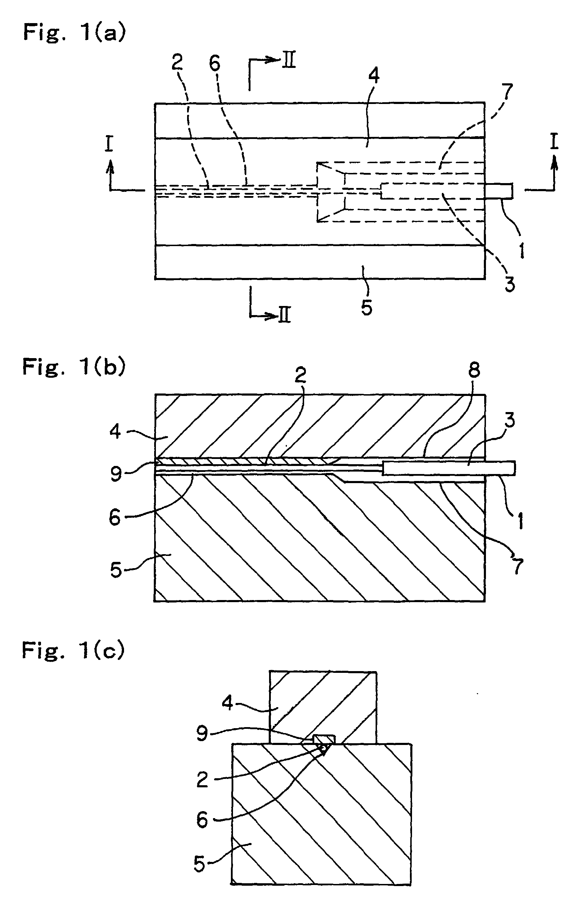

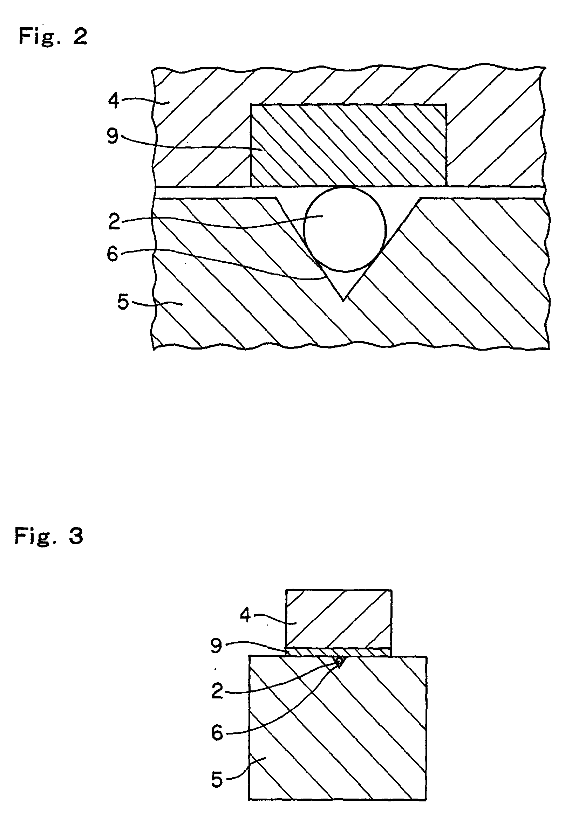

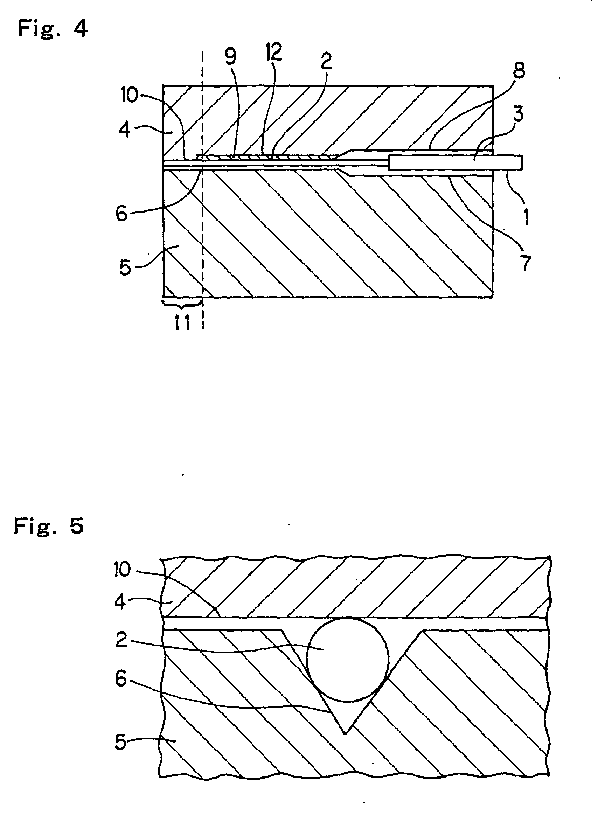

Fig. 1(a), (b), and (c) are explanatory figures showing an example of an optical fiber array according to the present invention. Fig. 1(a) is a planar view, Fig. 1(b) is a I-I sectional view of the Fig. 1(a), and Fig. 1(c) is a II-II sectional view of the Fig. 1(a). Fig. 2 is an enlarged sectional view showing a fixed condition of a core wire part. Fig. 3 is an explanatory sectional view showing another example of the optical fiber array according to the present invention. Fig. 4 is an explanatory sectional view showing a manufacturing method for the optical fiber array according to the present invention. Fig. 5 is an enlarged sectional view showing a fixed condition of the core wire part in the distal part of the optical fiber array in a manufacturing process of the optical fiber array according to the present invention.

### Best Mode for Carrying Out the Invention

An optical fiber array according to the present invention is characterized in that a resin layer is formed in a part contacting at least the core wire part of the surface on a side to which the core wire part of a lid substrate is pressed. On the basis of that a resin layer softer than glass and silicon is formed in the part of the lid substrate, which has a role of fixing by pressing the core wire part of the distal end of the optical fiber to the V groove of the V groove substrate, the lid substrate damages the core wire part less frequently in pressing the core wire part to the V groove to give almost no damage of the optical fiber in the optical fiber array after assembling. Thus, occurrence of a break of the optical fiber cause by such damage in assembling is reduced.

Figs. 1(a), (b), and (c) are explanatory figures showing an example of embodiments of the optical fiber array according to the present invention. Fig. 1(a) is a planar view, Fig. 1(b) is a I-I sectional view of the Fig. 1(a), and Fig. 1(c) is a II-II sectional view of the Fig. 1(a). In these figures, in order to simplify the explanation, the example, of which only one of the optical fibers has been fixed to the substrate, is shown. However, according to the optical fiber array according to the present invention, it is also possible to use a plurality of the optical fibers arranged to fix using the V groove substrate on which a plurality of V grooves have been formed.

The optical fiber array according to the present invention comprises a V groove substrate 5 on which a V groove 6 is formed and a lid substrate 4, in the same way as conventional one. On these substrates, a spot facing (stepped part) 7 and 8 are formed on these substrates to support a coating part 3 of an optical fiber 1. In assembling the optical fiber array using these substrates, the core wire part 2, that is made by removing a cover of the distal end of the optical fiber 1, is mounted on the V groove 6 on the V groove substrate 5, and the core wire part 2 is pressed from the top surface of the V groove substrate 5 to the V groove 6 by the lid substrate 4 in order to fix it. Fig. 2 is an enlarged sectional view showing a fixed condition of the core wire part 2. In such fixed condition, an adhesive agent (not shown) is injected into a space made between the lid substrate 4, the V groove substrate 5, and the core wire part 2 to harden and finally integrally prepare them.

In addition, according to the present invention, a soft resin layer 9 is formed in a part contacting to at least the core wire part 2 of the surface of a side to which the core wire part 2 of the lid substrate 4 is pressed as described above. Thus, the optical fiber is not so frequently damaged by pressing the core wire part 2 by the lid substrate 4.

In the Figs. 1(a), (b), and (c), the resin layer 9 is formed only in the part contacting to the core wire part 2 by filling the resin in a groove which is made on the surface of a side to which the core wire part 2 of the lid substrate 4 is pressed. However, as shown in Fig. 3, the resin layer 9 may be formed on all the surfaces of the side of the lid substrate 4 to which the core wire part 2 is pressed. In this case, although the used amount of the resin increases in comparison with the examples of Figs. 1(a), (b), and (c), preparation is easily carried out, because the groove for the resin layer is not required to make on the lid substrate.

In the present invention, for other sites than the resin layers of the V groove substrate 5 and the lid substrate 4, hard materials such as glass and silicon are used as like as conventional ones. Using a combination of a conventional hard materials and determining appropriately the thickness of the resin layer 9 allow prevention of falling down of the V groove substrate 5, the lid substrate 4, and the core wire part 2 of the optical fiber 1 by difference in thermal expansion.

Besides, in the manufacturing method for the optical fiber array according to the present invention, the followings may be allowed: the lid substrate used has a structure made of a hard material, such as glass and silicon, in that as shown in Fig. 4, only the distal end 10 thereof directly contacts to the core wire part 2 of the optical fiber 1 to press the core wire part 2 against the V groove 6 on the V groove substrate 5, the core wire part 2 is pressed against the V groove 6 by the distal end 10 to fix, the resin is filled in the space 12 made between the core wire part 2 and the lid substrate 4 to harden for formation of the resin layer 9, and after assembling, the distal end 11 of the optical fiber array including the distal end 10 of the lid substrate 4 is removed by means such as cutting or grinding. Fig. 5 is an enlarged sectional view showing a fixed condition of the core wire part 2 in the distal part 11 of the optical fiber array in this manufacturing procedure.

Manufacturing the optical fiber array according to the present invention by such a method allows assemblage of the core wire part 2 of the optical fiber 1 with precise positioning in the V groove 6 on the basis of the distal end 10 of the lid substrate 4 made of the hard material in assembling. In addition, the distal end 11 of the optical fiber array including the distal end 10 of the lid substrate 4 directly contacting to the core wire part 2 is removed after assemblage. Thus, even if the core wire part 2 is damaged by the distal end 10 of the lid substrate 4 in assembling, the damaged site is removed to leave no defect in the optical fiber array.

Herein, the kinds of resin used for the resin layer 9 are not specifically limited, but preferable is that of a low thermal expansion coefficient and a Shore hardness of D80, because the resin layer 9 needs to do no damage to the optical fiber and also to have a sufficient level of hardness to hold the core wire portion 2 of the optical fiber 1 in the V groove 6 after hardening. Specifically, an epoxy adhesive or the like is enumerated as such resin.

### Industrial Applicability

As described above, in assembling the optical fiber array according to the present invention, there is almost no damage of the optical fiber caused by pressing the core wire part of the optical fiber against the V groove by the lid substrate and the optical fiber does not easily allow an easy break by the damage.

## Claims

1. An optical fiber array having a structure in which a V groove substrate, on which a V groove is formed, and a lid substrate, which is integrally made with the V groove substrate, are equipped, a core wire part, that is made by removing a cover of a distal end of an optical fiber, is mounted on said V groove of the V groove substrate, and said core wire part is pressed and fixed from a top surface of the V groove substrate to the V groove by said lid substrate,
characterized in that a resin layer is formed in a part contacting at least the core wire part of the surface on a side to which the core wire part of said lid substrate is pressed.

2. The optical fiber array according to claim 1, wherein the resin layer is formed on all the surfaces on the side of said lid substrate to which the core wire part is pressed.

3. The optical fiber array according to claim 1, wherein the resin used for said resin layer does not do any damage to said optical fiber and has a sufficient level of hardness to hold the core wire part of said optical fiber in said V groove after hardening.

4. The optical fiber array according to claim 1, wherein the resin used for said resin layer is an epoxy adhesive.
